# EUROPEAN PATENT SPECIFICATION

(11) **EP 2 164 071 B1**
(45) Date of publication and mention of the grant of the patent: **09.11.2011**
(21) Application number: 09178873.7
(22) Date of filing: 01.09.2005
(51) Int. Cl.: G11B 20/10, G11B 27/30

(54) **Storage medium storing video data and interactive graphics stream, and reproducing apparatus and method**
Speichermedium mit Videodaten und interaktivem Grafikdatenstrom sowie Wiedergabevorrichtung und -verfahren
Support de stockage stockant des données vidéo et un flux graphique interactif, et appareil et procédé de reproduction

(30) Priority: 03.09.2004 KR 20040070532
(43) Date of publication of application: 17.03.2010
(62) Divisional of application: 05781097.0
(73) Proprietor: SAMSUNG ELECTRONICS CO., LTD., Suwon-si Gyeonggi-do 442-742 (KR)
(72) Inventor: Jung, Kil-Soo, Hwaseong-si Gyeonggi-do 445-986 (KR); Kang, Man-Seok, Gyeonggi-do (KR)
(74) Representative: Grootscholten, Johannes A.M.

(56) References cited:
- EP-A- 1 638 327
- EP-A- 1 713 269
- WO-A-2005/048261
- WO-A-2005/069304
- ALEXZANDER A: "DVD Studio Pro 3, Parts 1-4" WHAT'S NEW INSIDE - DVD STUDIO PRO 3, XX, XX, no. parts 1-4, 30 June 2004 (2004-06-30), XP002425819
- MARC LOY: "DVD Studio Pro 3: In the Studio" 26 October 2004 (2004-10-26), O'REILLY MEDIA, INC. , XP002515516 * page 103 - page 109 *

## Description

### Technical Field

An aspect of the present invention relates to multimedia reproduction, and more particularly, to a storage medium storing an interactive graphics stream providing a menu having a variety of screen conversion effects, and a reproducing apparatus and a reproducing method.

### Background Art

To reproduce a multimedia image, audio- visual (AV) data of the multimedia image, navigation data for controlling the reproduction of the AV data, and system data including command information related to a title of AV data to be reproduced first when the storage medium is inserted in a reproducing apparatus are recorded in a storage medium. Other data can also be recorded in the storage medium. In particular, an interactive graphics stream of the present invention is multiplexed as the main stream including video, audio, and subtitles and recorded in the storage medium, or is not multiplexed as the main stream and is recorded as a separate file in the storage medium.

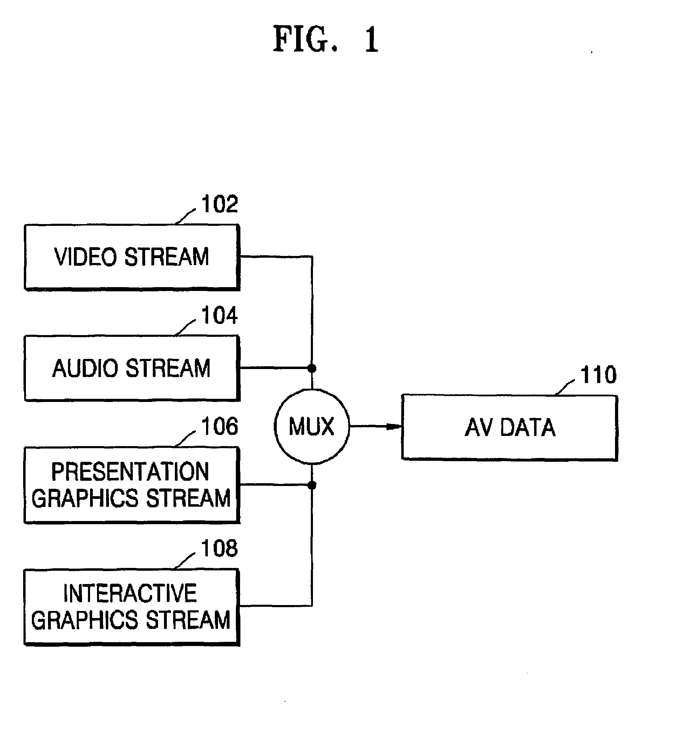

FIG. 1 is a block diagram of AV data including a variety of multiplexed streams. Referring to FIG. 1, in a storage medium storing a multimedia image, a video stream 102, an audio stream 104, a presentation graphic stream 106 for providing a subtitle, and an interactive graphics stream 108 for providing a menu screen to support a user interactive operation are multiplexed and recorded as the main stream. Hereinafter, the multiplexed main stream is called AV data 110. Although not shown, the interactive graphics stream can be recorded as a separate file in the storage medium instead of being multiplexed as the main stream.

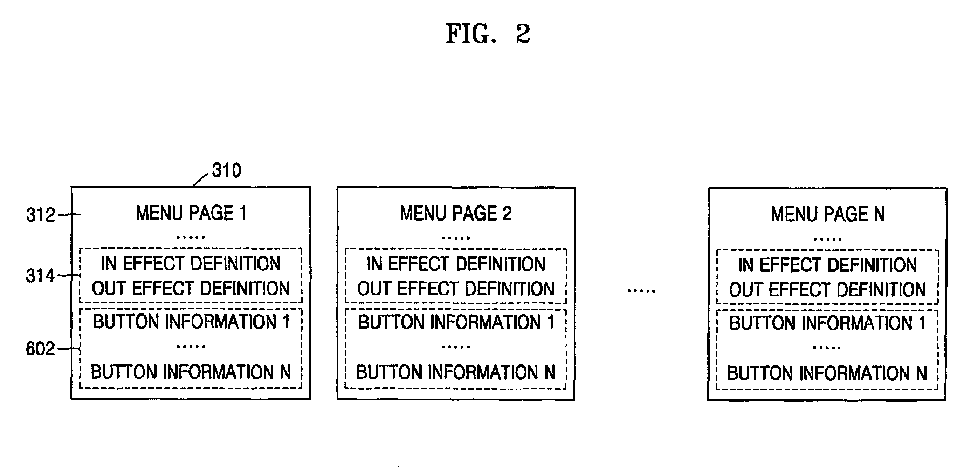

FIG. 2 illustrates the configuration of a plurality of menu pages included in the interactive graphics stream 108. Referring to FIG. 2, the interactive graphics stream 108 for providing a menu screen includes a plurality of menu pages 1 through N. A menu page is used to display a menu on a screen. Each menu page includes effect information 314 including in-effect information, to be executed when a menu page appears, out-effect information, to be executed when a menu page disappears, and information 602 on buttons. Among a plurality of buttons included in a menu page, some buttons contain a navigation command to move to another menu page, thereby implementing the plurality of menu pages. When a menu page conversion occurs, each menu page includes screen conversion information (i.e. the in-effect information and the out-effect information included in the effect information 314) in order to display active movements of buttons to appear or disappear. That is, when a button is used to change from one menu page to the next menu page, an out-effect of the specific menu page is executed, an in-effect of the next menu page is executed, and the next menu page is displayed on the screen. However, such a screen conversion effect of the menu page causes the following problems.

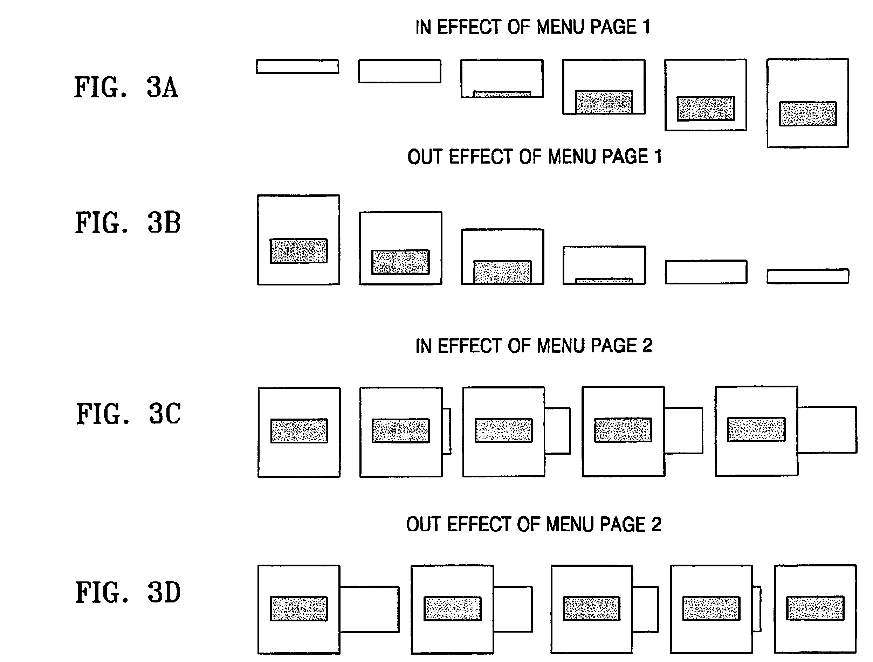

First, when a menu page conversion occurs, the screen conversion effect of a menu page is unconditionally executed in the order of the out-effect of a menu page and the in-effect of the next menu page, making the screen conversion effect unnatural. To be more specific, FIGs. 3A through 3D illustrate problems caused when the configuration of the plurality of menu pages shown in FIG. 2 is used to display a menu screen. Referring to FIGs. 3A through 3D, when a manufacturer wants the effect of a sliding sub menu for a button or graphical interface of a main menu, such an effect is executed using two menu pages. A menu page 1 has a screen conversion effect of slowly appearing when required on the screen, and slowly disappearing when not required on the screen as shown in FIGs. 3A and 3D. A menu page is required to be displayed on the screen at a time indicated by a Presentation Time Stamp (PTS) to display a menu, when a main menu appears due to a user's operation such as by pushing of a button for a pop-up menu, or when a main menu appears due to a button navigation command of another menu page. A menu page is not required to be displayed when a valid reproduction period expires or a main menu disappears due to the user's operation such as the pushing of the button for the pop-up menu. To this end, the in-effect is used to make the menu page 1 slowly larger and the out-effect is used to make the menu page 1 slowly smaller. The screen conversion effect does not require a plurality of images, but an image such as a last in-effect image or a first out-effect image. An image is cropped to display a desired part thereof on a predetermined window region. A button of the menu page 1 has a navigation command to move to a menu page 2.

FIG's. 3C and 3D illustrate an in-effect and an out-effect of the menu page 2. When the button of the menu page 1 is executed, the in-effect makes a sub menu slide into view and the out-effect makes the sub menu slide away. The disclosure of A. Alexander: "DVD Studio Pro 3, Parts 1-4", "what's new inside - DVD studio pro 3, XX, XX, No. parts 1-4", of 30 June 2004, XP-002425819 is acknowledged here as closest prior art. Further the contents of WO-2005/069304 and WO-2005/048261 is herewith acknowledged to constitute prior art not yet published at the effective filing date for the present invention.

### Technical Problem

However, such a combination of two menu pages makes it impossible to display a menu desired by the manufacturer, since an execution of the button of the menu page 1 (i.e., a main menu) does not naturally make the sub menu slide into view. Because an execution of the out-effect of the menu page 1 makes the menu page 1 completely disappear, and then the main menu suddenly appear on the screen according to the execution of the in-effect of the menu page 2 while the sub menu slowly appears. That is, when the menu page conversion occurs, i.e. a disappear effect, an undesired effect is unconditionally executed, making a desired screen conversion unnatural.

Also, when a menu page is displayed from or navigated to a plurality of different menu pages, the menu page must execute a variety of screen conversion effects according to the position of a button of another menu page to be converted. However, a variety of screen disappear effects are not executed by a conventional menu page.

### Technical Solution

According to an aspect of the present invention, there is provided a storage medium and a reproducing apparatus according to respective appended independent claims.

### Advantageous Effects

According to an aspect of the present invention, there is provided a storage medium storing an interactive graphics stream providing a menu having a variety of screen conversion effects capable of active navigation as a consequence of in particular the possibility of the feature of a disappearing effect, and a reproducing apparatus and method.

### Description of Drawings

FIG. 1 is a block diagram of audio- visual (AV) data including a variety of multiplexed streams;
FIG. 2 illustrates the configuration of a plurality of menu pages included in an interactive graphics stream;
FIG. 3A through 3D illustrate problems caused when the configuration of the plurality of menu pages shown in FIG. 2 is used to display a menu screen;
FIG. 4 is a block diagram illustrating an AV data reproducing apparatus according to an embodiment of the present invention;
FIG. 5 illustrates the configuration of a plurality of menu pages including control information required to activate a screen conversion effect according to an aspect of the invention;
FIG. 6 illustrates the configuration of a menu page defining a variety of screen conversion effects according to an embodiment of the present invention;
FIG. 7 illustrates the plurality of menu pages of FIG. 6 displayed on a screen; and
FIG. 8 is a flowchart illustrating a method of reproducing the interactive graphics stream according to an embodiment of the present invention.
FIG. 9 illustrates a block diagram of a conventional recording and/or reproducing apparatus.

### Best Mode

According to an aspect of the present invention, there is provided a storage medium storing multimedia information, the storage medium comprising all features in combination of the appended storage medium claim.

Accordingly, preferred aspects of the present invention are defined in the appended storage medium related dependent claims.

According to another aspect of the present invention, there is provided a reproducing apparatus and method, including all features of the appended apparatus and method related, independent claims.

According to still another aspect of the present invention, there is provided a reproducing method, including all features of the independent appended method claim, as well as a computer readable medium with stored thereon or therein processing instructions according to the reproducing method.

### Mode for Invention

Reference will now be made in detail to the present embodiments of the present invention, examples of which are illustrated in the accompanying drawings, wherein like reference numerals refer to the like elements throughout. The embodiments are described below in order to explain the present invention by referring to the figures.

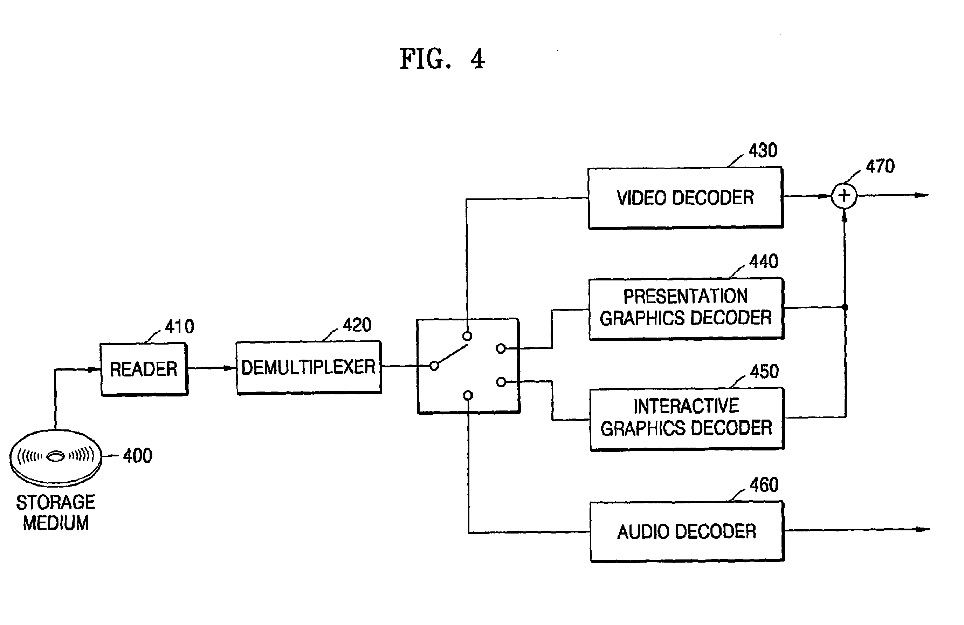

FIG. 4 is a block diagram illustrating an AV data 110 reproducing apparatus according to an embodiment of the present invention. Referring to FIG. 4, the AV data 110 reproducing apparatus includes a reader 410, a demultiplexer 420, decoders 430 through 460, and a blender 470. While described in terms of a reproducing apparatus, it is understood that an aspect of the invention can be implemented in a device that records data in addition to reproducing the data.

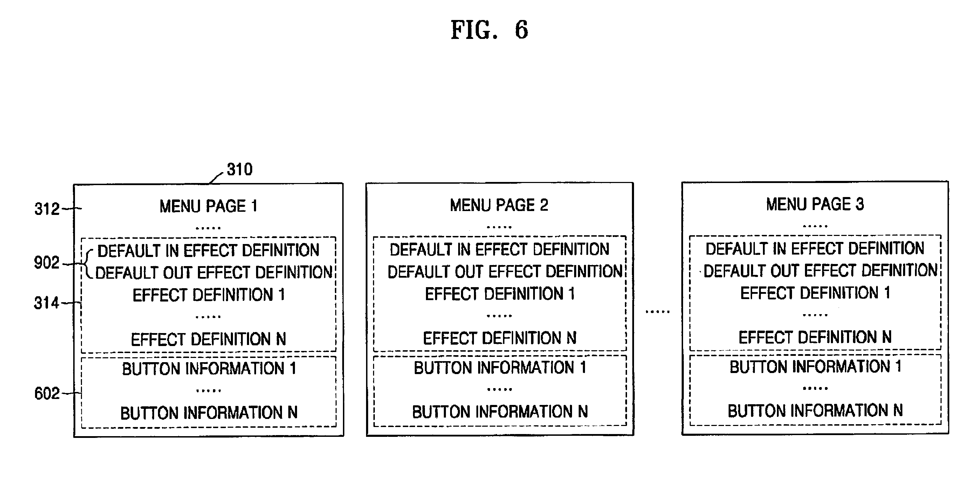

The reader 410 reads multiplexed AV data 110 from a storage medium 400 and transmits the multiplexed AV data 110 to the demultiplexer 420. The demultiplexer 420 divides the received AV data 110 into the video stream 102, the audio stream 104, the presentation graphic stream 106, and the interactive graphics stream 108 (shown in FIG. 6), and transmits the divided streams 102 through 106 and 108 to the decoders 430 through 460, respectively. Each stream transmitted to the respective decoder is decoded according to a corresponding data type, and all are ready to be displayed on a screen at a designated time. The decoded video stream 102, the presentation graphic stream 106, and/or the interactive graphics stream 108 are overlaid as a single image using the blender 470. Finally, an image selected based on an output status set by a user is displayed on the screen (not shown). For example, the output status can be controlled based on a user's selection such as of a subtitle on/off status or a mute status. The storage medium 400 is not restricted and can be an optical storage medium (such as a CD, DVD, Bluray disks, HD DVD, AOD) a magnetic medium, a magneto optical medium, and/or flash memory.

In particular, the interactive graphics decoder 450 receives the interactive graphics stream (such as the stream 608 shown in FIG. 6) from the storage medium 400, decodes the interactive graphics stream 108, and outputs a menu screen including buttons or graphical user interfaces on the screen (not shown) at a designated time. A user's selection can be input by selecting a specific button or a graphical user interface on the output menu screen using an input device, such as a button, mouse, touch screen, or other such device. That is, a user interactive function can be provided.

While not required, the interactive graphics stream 108 can be separate from the AV data 110 and recorded in the format of out-of-mux in the storage medium 400 according to an aspect of the invention.

The present invention provides the interactive graphics stream 108 including a navigation command to determine whether to execute a screen conversion effect included in a menu page, in order to execute a natural screen conversion effect in a menu page having a variety of reproducing orders. The interactive graphics stream 108 which can properly execute a screen conversion effect desired by a manufacturer includes one or more menu pages for implementing a single menu screen; each menu page including in-effect information to be executed when a menu page appears on the menu screen; each menu page including out-effect information to be executed when a menu page disappears from the menu screen; and a button or graphical user interface containing a navigation command to move to another menu page further including a navigation command to determine whether to execute the screen conversion effect information 314 of the in-effect information and the out-effect information.

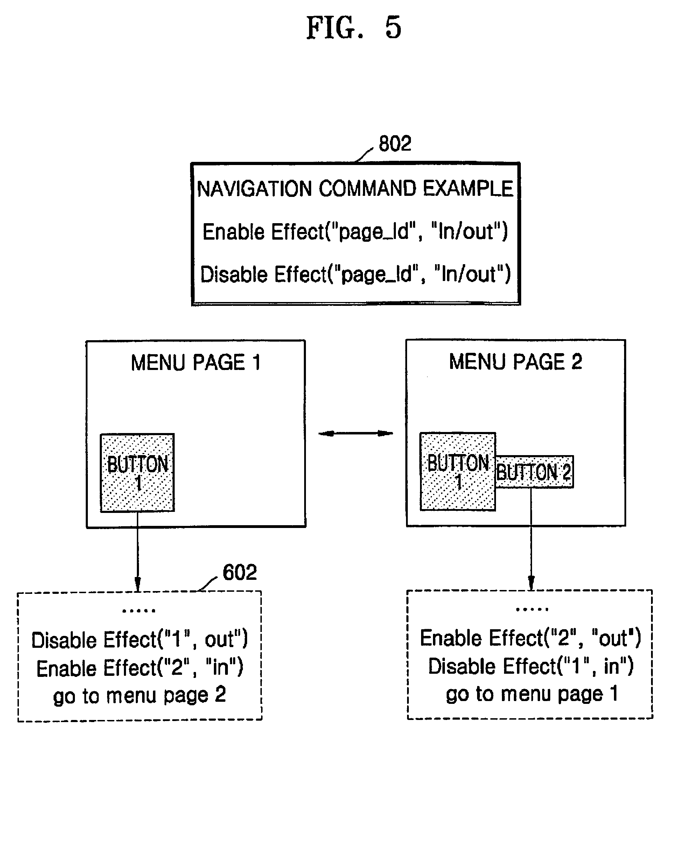

FIG. 5 illustrates the configuration of a plurality of menu pages including control information 802 required to activate a screen conversion effect. Referring to FIG. 5, the interactive graphics stream 108 further includes a navigation command to determine whether to execute the in-effect information and the out-effect information as the control information 802 required to activate the screen conversion effect. That is, the navigation command contains 'Enable' and 'Disable' commands to determine whether to execute the in-effect information and the out-effect information, and uses a page ID 'page_id' and information 'in/out' designating the corresponding in-effect information or the out-effect information as parameters. The control information 802 is a part of button information or graphical user interface 602 (i.e., a group of navigation commands to be executed), when a button or interface is pressed.

A menu page 1 and a menu page 2 can have the same screen conversion effect as that shown in FIG's. 3 A through 3D. An in-effect of the menu page 1 makes a button or graphical user interface 1 fade in, and an out-effect of the menu page 1 makes the button or graphical user interface 1 fade out. An in-effect of the menu page 2 makes a button or graphical user interface 2 slide out from the button or graphical user interface 1 while displaying the button or graphical user interface 1 on the screen, and an out- effect of the menu page 2 makes the button or graphical user interface 2 slide away while displaying the button or graphical user interface 1 on the screen. However, it is understood that other effects can be used.

When the interactive graphics stream 108 is reproduced by a reproducing apparatus without being controlled, as described with reference to FIG's. 3A through 3D, no menu is displayed since an execution of the button of the menu page 1 (i.e., a main menu), does not naturally make the sub menu slide out. An execution of the out-effect of the menu page 1 makes the menu page 1 completely disappear from the screen as shown in FIG's. 3 A and 3B, and the main menu which disappeared along with the in- effect of the menu page 2 suddenly reappears on the screen while the sub menu slowly appears as shown in FIG's. 3C and 3D. That is, when the menu page conversion occurs, an undesired effect is unconditionally executed, making a desired screen conversion unnatural. Therefore, as compared to the interactive graphics stream 108 of FIG. 2, the interactive graphics stream 108 includes a Disable Effect (T, 'out') and an Enable Effect ('2', 'in') as button commands of the menu page 1, such that a conversion between the menu page 1 and the menu page 2 does not result in executing the out- effect of the menu page 1, making the screen conversion effect natural.

FIG. 6 illustrates the configuration of an interactive graphics stream 108 having menu pages 1 through 3 defining a variety of screen conversion effects according to an embodiment of the present invention. Referring to FIG. 6, the interactive graphics Stream 108 which can properly execute a screen conversion effect according to a variety of reproducing orders includes a plurality of conversion effect information items 314. The interactive graphics stream 108 includes one or more menu pages for implementing a menu screen. Each menu page includes default in-effect information 902 to be executed when a menu page appears on the menu screen and each menu page has no navigation command to control the screen conversion effect. Each menu page includes default out-effect information 902 to be executed when a menu page disappears from the menu screen and each menu page has no navigation command to control the screen conversion effect. Each menu page includes a plurality of conversion effect definition information items 1 to N executed by the navigation command to control the screen conversion effect when a menu page conversion occurs. Each menu page includes button information 1 to N containing a navigation command to move to another menu page further including a navigation command to determine whether to execute screen conversion effect information of the default in-effect information and the default out-effect information and control to execute one of the plurality of conversion effect information items 314.

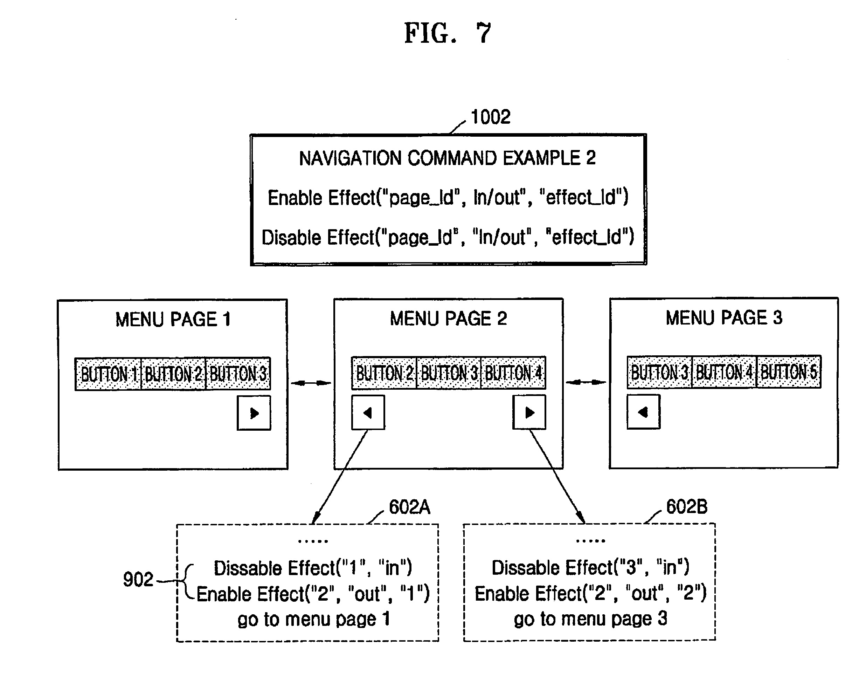

FIG. 7 illustrates the plurality of menu pages of FIG. 6 displayed on a screen. Referring to FIG's. 6 and 7, the interactive graphics stream 108 includes a navigation command 1002 to control a screen conversion effect to be executed when a menu page conversion occurs, and a plurality of conversion effect information items 314 in each menu page.

Each execution of a button or graphical user interface converts a menu page into a plurality of different menu pages. Referring to FIG. 6, a definition of one in-effect and one out-effect as shown in FIG. 6 cannot properly implement a screen conversion effect desired by a manufacturer. Referring to FIG. 7, when a left arrow button or graphical user interface in a menu page 2 is pressed, buttons or graphical user interfaces 1, 2, and 3 are displayed, whereas, when a right arrow button or graphical user interface of the menu page 2 is pressed, buttons or graphical user interfaces 3, 4, and 5 are displayed. Since the two buttons or graphical user interfaces implement a different screen conversion effect, it is conventionally impossible to implement the screen conversion effect desired by the manufacturer.

The menu page according to an embodiment of the present embodiment may have the plurality of screen conversion definition effect information items as shown in FIG. 6. As shown in FIG. 7, a navigation command to control the screen conversion effect may further have a parameter 'effect_id' that selects one of plurality of screen conversion effect information items 314. When a menu page conversion occurs, one of plurality of screen conversion effect information items included in a specific menu page can be selected and executed.

Referring back to FIG. 7, when a screen conversion from the menu page 2 to a plurality of different menu pages occurs, like left button information 602 A, an in- effect of a menu page 1 is not displayed, but an out-effect of the menu page 2 executes conversion effect information having ID 1 among the plurality of screen conversion effect information items, thereby converting to the menu page 1. Meanwhile, like right button information 602 B, when the right arrow button is pressed, a different screen conversion effect, i.e. an in-effect of a menu page 3, is not displayed, but the out-effect of the menu page 2 executes conversion effect information having ID 2 among the plurality of screen conversion effect information items. Therefore, one of a variety of screen conversion effects can be designated.

Since the menu page 2 includes default conversion effect information 902, a screen conversion effect can be designated when the navigation command included in the button command is not executed, e.g. when a first page is displayed, a menu page disappears after a valid reproduction period, or the menu page is displayed or disappears due to a user operation such as pushing a popup button or a pop off button included in a user input device such as remote controllers. As such, the definition items 1 to N correspond to button information 1 to N. While shown as being of the same number, it is understood that the number of definition items can be other than the number of button information items.

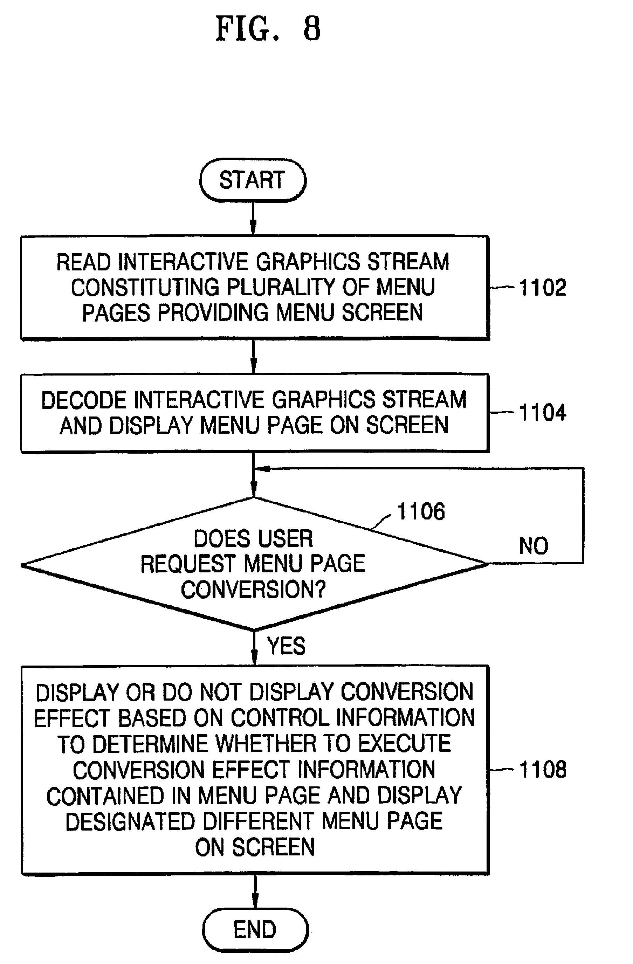

FIG. 8 is a flowchart illustrating a method of reproducing the interactive graphics stream according to an embodiment of the present invention. Referring to FIG. 8, to effectively display a menu screen, an interactive graphics stream 108 constituting a plurality of menu pages providing the menu screen is read (Operation 1102). The interactive graphics stream 108 is decoded and a menu page is displayed on a screen (Operation 1104). When a user requests a menu page conversion (Operation 1106) (i.e. the user presses a button or graphical user interface including a menu page conversion command) or the popup button or graphical user interface or the pop off button or graphical user interface included in the user input device, a conversion effect is displayed or not based on control information to determine whether to execute conversion effect information contained in the menu page, and a designated different menu page is displayed on the screen (Operation 1108).

It is possible for an embodiment of the present invention to be realized on a computer-readable recording medium as computer-readable code to be implemented by a general or special purpose computer. Computer-readable recording media include every kind of recording device that stores computer system-readable data. ROMs, RAMs, CD-ROMs, magnetic tapes, floppy discs, optical data storage, etc. are examples of computer-readable recording media. Computer-readable recording media can also be realized in the form of a carrier wave (e.g., transmission through internet). A computer-readable recording medium can be dispersed in a network-connected computer system, resulting in being stored and executed as distributed code.

Also, while described in terms of video data, it is understood that menus can be generated over other types of data, such as still images and/or text in addition to or instead of video data.

Button or graphical user interface information included in each menu page includes a navigation command to determine whether to execute conversion effect information or a navigation command to select and control whether to execute conversion effect information among a plurality of conversion effect information items, thereby designating one of a plurality of conversion effect information items and determining to execute designated conversion effect information when a menu page conversion occurs and effectively displaying various screen conversion effects.

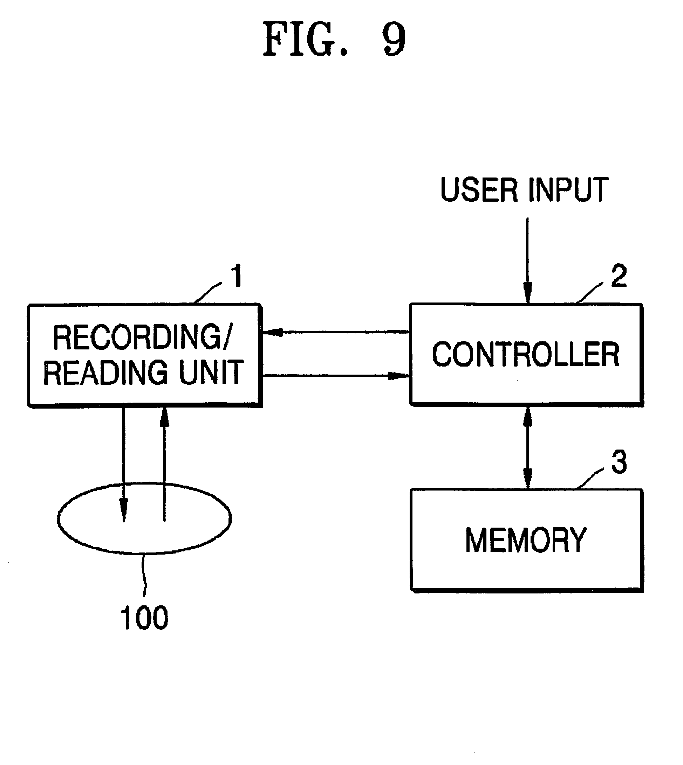

FIG. 9 is a block diagram of a recording and/or reproducing apparatus corresponding to an aspect of the invention. Referring to FIG. 9, the recording apparatus includes a recording/reading unit 1, e.g., a pickup, a controller 2, and a memory 3. The recording/reading unit 1 records data on a recording medium 100, which of course could be a recording medium according to embodiments of the present invention, and reads data from the recording medium 100. Similarly, the controller 2 records and reproduces disc related data according to embodiments of the present invention as set forth below in relation to FIG's. 4-8.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A storage medium storing multimedia information for use with a recording and/or reproducing apparatus, the storage medium including video data and graphics data for displaying a menu screen overlaid on an image displayed on the basis of the video data, the graphics data comprising:
- data specifying a plurality of menu pages defining a variety of screen conversion effects, wherein the data specifying each menu page includes a plurality of screen conversion effect definition information items to be executed when a corresponding menu page appears on or disappears from the menu screen and a plurality of button information items each containing a navigation command to move to another menu page; and
- control information specifying whether the apparatus is to execute a corresponding screen conversion effect definition information item.

2. The storage medium of claim 1, wherein the navigation command is executed when a corresponding button is selected.

3. A reproducing apparatus, which reads data including video data and graphics data to be reproduced, the apparatus comprising:
- a video decoder which decodes the video data; and
- a graphics decoder which decodes the graphics data comprising data specifying a plurality of menu pages defining a variety of screen conversion effects and control information, wherein the data specifying each menu page includes a plurality of screen conversion effect definition information items to be executed when a corresponding menu page appears on or disappears from the menu screen, and a plurality of button information items each containing a navigation command to move to another menu page, the control information specifying whether to execute a corresponding screen conversion effect definition information item; and
- a controller to determine whether to execute the corresponding screen conversion definition information item according to the control information.

4. A reproducing method, comprising:
- decoding video data; and
- decoding graphics data comprising data specifying a plurality of menu pages defining a variety of screen conversion effects and control information, wherein the data specifying each menu page includes screen conversion effect definition information items to be executed when a corresponding menu page appears on or disappears from the menu screen, and a plurality of button information items each containing a navigation command to move to another menu page, the control information specifying whether to execute a corresponding screen conversion effect definition information item; and
- determining whether to execute the corresponding screen conversion effect definition information item according to the control information.

5. A computer readable medium encoded with processing instructions performing the method of claim 4 as performed by a computer.

## Patentansprüche

1. Multimediainformationen speicherndes Speichermedium zur Verwendung mit einer Aufzeichnungs- und / oder Wiedergabevorrichtung, wobei das Speichermedium Videodaten und Graphikdaten zum Anzeigen eines Menüschirms beinhaltet, der auf ein auf Grundlage der Videodaten angezeigtes Bild gelegt ist, wobei die Graphikdaten umfassen:
- Daten, die eine Mehrzahl von Menüseiten spezifizieren, die eine Vielzahl von Schirmwandlungseffekten definieren, wobei die Daten, die jede Menüseite spezifizieren, eine Mehrzahl von Schirmwandlungseffektdefinitionsinformationselementen, die auszuführen sind, wenn eine entsprechende Menüseite auf dem Menüschirm erscheint oder davon verschwindet, und eine Mehrzahl von Schaltflächeninformationselementen einschließen, die jeweils einen Navigationsbefehl zwecks Gehens zu einer anderen Menüseite enthalten; und
- Steuerungsinformationen, die spezifizieren, ob die Vorrichtung ein entsprechendes Schirmwandlungseffektdefinitionsinformationselement ausführen soll.

2. Speichermedium nach Anspruch 1, wobei der Navigationsbefehl ausgeführt wird, wenn eine entsprechende Schaltfläche ausgewählt wird.

3. Wiedergabevorrichtung, die wiederzugebende Daten, einschließlich Videodaten und Graphikdaten, liest, wobei die Vorrichtung umfasst:
- einen Videodecoder, der die Videodaten decodiert; und
- einen Graphikdecoder, der die Graphikdaten decodiert, die Daten umfassen, die eine Mehrzahl von Menüseiten spezifizieren, die eine Vielzahl von Schirmwandlungseffekten und Steuerungsinformationen definieren, wobei die Daten, die jede Menüseite spezifizieren, eine Mehrzahl von Schirmwandlungseffektdefinitionsinformationselementen, die auszuführen sind, wenn eine entsprechende Menüseite auf dem Menüschirm erscheint oder davon verschwindet, und eine Mehrzahl von Schaltflächeninformationselementen einschließen, die jeweils einen Navigationsbefehl zwecks Gehens zu einer anderen Menüseite enthalten, wobei die Steuerungsinformationen spezifizieren, ob ein entsprechendes Schirmwandlungseffektdefinitionsinformationselement ausgeführt werden soll; und
- einen Controller, um zu bestimmen, ob das ent sprechende Schirmwand lungs definitions informations element in Übereinstimmung mit den Steuerungsinformationen ausgeführt werden soll.

4. Wiedergabeverfahren, umfassend:
- Decodieren von Videodaten; und
- Decodieren von Graphikdaten, die Daten umfassen, die eine Mehrzahl von Menüseiten spezifizieren, die eine Vielzahl von Schirmwandlungseffekten und Steuerungsinformationen definieren, wobei die Daten, die jede Menüseite spezifizieren, Schirmwand lungseffekt definitions informations elemente, die auszuführen sind, wenn eine entsprechende Menüseite auf dem Menüschirm erscheint oder davon verschwindet, und eine Mehrzahl von Schaltflächeninformationselementen einschließen, die jeweils einen Navigationsbefehl zwecks Gehens zu einer anderen Menüseite enthalten, wobei die Steuerungsinformationen spezifizieren, ob ein entsprechendes Schirmwandlungseffektdefinitionsinformationselement ausgeführt werden soll; und
- Bestimmen, ob das entsprechende Schirmwandlungseffektdefinitionsinformationselement in Übereinstimmung mit den Steuerungsinformationen ausgeführt werden soll.

5. Computerlesbares Medium, codiert mit Verarbeitungsanweisungen, die das Verfahren nach Anspruch 4 verrichten, als von einem Computer durchgeführt.

## Revendications

1. Support d'enregistrement permettant de mémoriser des informations multimédia par l'intermédiaire d'un appareil d'enregistrement et/ou de reproduction, le support d'enregistrement comprenant des données vidéos et des données graphiques permettant l'affichage d'un écran menu superposé à une image affichée conformément aux données vidéos, les données graphiques comprenant :
- des données spécifiant une pluralité de pages de menu définissant une variété d'effets de conversion d'écran, les données spécifiant chaque page de menu comprenant une pluralité d'informations de définition d'effets de conversion d'écran devant être exécutées lorsqu'une page de menu correspondante apparaît ou disparaît de l'écran menu, et une pluralité d'informations de bouton contenant chacune une commande de navigation visant à passer à une autre page de menu ; et
- des informations de commande spécifiant si l'appareil doit exécuter une information de définition d'effets de conversion d'écran correspondante.

2. Support d'enregistrement selon la revendication 1, dans lequel la commande de navigation est exécutée lorsqu'un bouton correspondant est sélectionné.

3. Appareil de reproduction lisant des données comprenant des données vidéos et des données graphiques, l'appareil comprenant :
- un décodeur vidéo qui décode les données vidéos ; et
- un décodeur de données graphiques qui décode les données graphiques comprenant des données spécifiant une pluralité de pages de menu définissant une variété d'effets de conversion d'écran et d'informations de commande, les données spécifiant chaque page de menu comprenant une pluralité d'informations de définition d'effets de conversion d'écran devant être exécutées lorsqu'une page de menu correspondante apparaît ou disparaît de l'écran menu, et une pluralité d'informations de bouton contenant chacune une commande de navigation visant à passer à une autre page de menu, les informations de commande spécifiant s'il y a lieu d'exécuter une information de définition d'effets de conversion d'écran correspondante conformément à des informations de commande ; et
- un contrôleur servant à déterminer s'il y a lieu d'exécuter l'information de définition de d'effets conversion d'écran correspondante conformément aux informations de commande.

4. Procédé de reproduction, comprenant :
- le décodage de données vidéos ; et
- le décodage de données graphiques comprenant des données spécifiant une pluralité de pages de menu définissant une variété d'effets de conversion d'écran et d'informations de commande, les données spécifiant chaque page de menu comprenant des informations de définition d'effets de conversion d'écran devant être exécutées lorsqu'une page de menu correspondante apparaît ou disparaît de l'écran menu, et une pluralité d'informations de bouton contenant chacune une commande de navigation visant à passer à une autre page de menu, les informations de commande spécifiant s'il y a lieu d'exécuter une information de définition d'effets de conversion d'écran correspondante ; et
- la détermination de l'exécution ou non de l'information de définition d'effets de conversion d'écran conformément aux informations de commande.

5. Support lisible par ordinateur, porteur d'instructions de traitement mettant en oeuvre le procédé selon la revendication 4, exécuté par un ordinateur.
